Europäisches Patentamt

(19) European Patent Office

Office européen des brevets

(11) Publication number : **0 305 088 B1**

# (12) EUROPEAN PATENT SPECIFICATION

(45) Date of publication of patent specification :
**06.11.91 Bulletin 91/45**

(21) Application number : **88307453.6**

(22) Date of filing : **11.08.88**

(51) Int. Cl.⁵ : **B60R 13/06, B21D 47/00**

(54) **A core for a strip structure.**

(30) Priority : **25.08.87 GB 8720045**

(43) Date of publication of application :
**01.03.89 Bulletin 89/09**

(45) Publication of the grant of the patent :
**06.11.91 Bulletin 91/45**

(84) Designated Contracting States :
**AT BE CH DE ES FR GR IT LI NL SE**

(56) References cited :
**EP-A- 0 124 671**
**EP-A- 0 252 659**
**GB-A- 2 181 698**
**US-A- 2 290 842**
**US-A- 4 188 424**

(73) Proprietor : **SILENT CHANNEL PRODUCTS
LIMITED**
**Dryden House St. John's Street**
**Huntingdon Cambridgeshire PE18 6DD (GB)**

(72) Inventor : **Pike, Harold William Edward**
**"Elm Lee" Conington**
**Nr.Elsworth Cambridgeshire (GB)**

(74) Representative : **Jones, Michael Raymond et al**
**HASELTINE LAKE & CO. Hazlitt House 28**
**Southampton Buildings Chancery Lane**
**London WC2A 1AT (GB)**

## Description

This invention relates to a core, sometimes known as a carrier, for a strip structure and is more particularly, but not exclusively, concerned with a metal core for strip structures such as flange finishers, door seal products and flocked rubber sealing strips.

At present, the metal core for a strip structure is formed by taking an elongate rectangular strip of metal, usually steel, and subjecting that elongate metal strip to one of two processes. In one process, side slots are punched or pressed out of the strip thereby to create a ribbed structure having a continuous central spine. This process suffers from the disadvantage that the punch wears and eventually breaks. Moreover, a portion of metal is inevitably lost from the strip. In an alternative, second, process the metal strip is lanced across a portion of its width. The lanced cuts in the metal extend inwardly from each lateral edge of the strip, the cuts ending short of a central region of the strip in order to leave a continuous central spine to the strip. The elongate strip, bearing the cuts, is then longitudinally stretched so that the cuts open up to yield a series of slots on either side of the central spine. This technique suffers from the disadvantage that the central spine, on stretching, becomes thinned relative to the ribs of the strip and the structure is inherently weakened. A serious loss of clamping may be experienced, because of this thinning, when the profile is formed into a "U" section.

British Patent GB-A-1492061 relates to a reinforcing carrier for a flexible channel-shaped sealing, finishing or guide strip, comprising a series of U-form elements arranged side-by-side to define a channel, the legs of the elements being substantially straight and adjacent legs of adjacent elements being interconnected by means of short connecting links each of which extends from a point on a leg of one element to a point on the corresponding leg of the adjacent element, the two said points being at different distances from the base of the said channel and at each such point there being substantially the same flexibility between the elements and the connecting links.

The strip has been found not to possess the necessary characteristics for enabling strip structures, which have the desirable bending and gripping qualities which are required on modern automobiles, to be produced.

EP-A-0124671, US-A-2290842 and DE-A-1430614 each relate to a metal stiffening core for a sealing section, primarily for use in motor and similar vehicles. The cores described, when flat before bending into a channel, each include a series of elongate hexagonal apertures. It has been found that channel structures of the general form shown and described in EP-A-0124671, US-A-2290842 and DE-A-1430614 do not possess adequate lateral flexibility, i.e., the structures do not easily bend out of a plane parallel to the plane of a channel side wall. The cores described in each of the three documents include a central aperture which extends across at least about 70% of the width of the core. Thus, the central region of each of these prior art cores comprises a series of parallel metal bands, the only strengthening to the core being close to the extremities of the walls of the core.

Our European Patent Application EP-A-0252659 discloses an elongate, laminar blank intended to be formed into an elongate channel-shaped core for a strip structure, and comprising a central spine region extending along the length of the blank and, to each side of the central region, a side region comprising a regular series of alternate legs and slots each leg extending generally perpendicularly to the length of the blank in a direction outwardly from the central region to a lateral edge of the blank and each leg on one of said sides being aligned across the width of the blank with a leg on the other of said sides to form a pair of aligned legs each slot extending from a respective apex in the central region outwardly to its respective lateral edge and each slot on one of said sides being aligned across the width of the blank with a slot on the other of said sides to form a pair of aligned slots ; and the central region being provided with a plurality of evenly spaced apertures each of which extends in a direction generally perpendicular to the length of the blank with the centreline of a pair of aligned legs ; wherein the length, when measured in a direction generally perpendicular to the length of the blank, of each aperture is no greater than 50% of the total width of the blank and wherein the ratio of the length of each aperture to the distance between respective apices of an aligned pair of slots adjacent to the aperture is in the range of from 1. 5 : 1 to 6 : 1.

Reinforcing channel-shaped cores made from the blanks described in our European Patent Application EP-A-0252659 possess considerable strength in the longitudinal direction and are also highly flexible laterally (i.e. bending out of a plane parallel to the plane of a channel wall).

It has now been found that the flexibility of a strip structure including a channel-shape core in accordance with our earlier European patent application can be enhanced without serious loss in the overall tensile strength of the strip structure by adjusting the positions of the central apertures.

Thus, in accordance with a first aspect of the present invention there is provided an elongate, laminar blank intended to be formed into an elongate channel-shaped core for a strip structure, comprising a central spine region extending along the length of the blank and, to each side of the central region, a side region comprising a regular series of alternate legs and slots; each leg extending generally perpendicularly to the length of the blank in a direction outwardly from the central region to a lateral edge of the blank and each leg on one of said sides being aligned across the width of the blank with a leg on the other of said sides to form a pair of aligned legs ; each slot extending from a respective apex outwardly to its respective lateral edge and each slot on one of said sides being aligned across the width of the blank with a slot on the other of said sides to form a pair of aligned slots ; and the central region being provided with a plurality of evenly spaced apertures each of which extends in a direction generally perpendicular to the length of the blank and is aligned across the width of the blank with the centreline of a pair of aligned legs (see e.g. DE-A-1430614), characterised by all the features defined in the characterising portion of claim 1.

The blank is preferably made using a lancing method, which forms a second aspect of this invention. Thus, according to a second aspect of this invention, there is provided a method of producing an elongate blank according to the first aspect of the present invention, which method comprises forming, in an elongate metal strip of substantially constant width, a first series of regular, spaced-apart cuts extending normally from each lateral edge of the metal strip, each terminating at an apex outwardly within an intermediate region of the strip, each cut from one lateral edge of the metal strip being co-linear with a cut from the other lateral edge of the strip to form a pair of aligned cuts ; forming a second series of cuts, parallel to the first series of cuts, and spaced equally or substantially equally between cuts of the first series of cuts, said second series of cuts extending across the intermediate region of the strip and terminating short of the lateral edges of the strip but overlapping adjacent cuts of the first series of cuts, some of said second series of cuts being offset to one side of the blank, others of the second series of cuts being offset to the other side of the blank ; and longitudinally stretching the strip so as to open the cuts thereby to form an elongate carrier blank ; wherein the length, when measured in a direction generally perpendicular to the length of the blank, of each of the second cuts is no greater than 50% of the total width of the blank and wherein the ratio of the length of each of the second cuts to the distance between the apices of an adjacent aligned pair of first cuts is in the range of from 1.5 : 1 to 6 : 1.

It is to be appreciated that the blank of the first aspect of this invention could be formed using a conventional punching technique.

Preferably, alternate apertures in the central region should be offset to opposite sides of the blank. However, any regular, or irregular, offset pattern is contemplated. For instance, according to an embodiment of the present invention to offset, for example, two adjacent apertures to one side of the blank, the next two to the side and so on.

The effect of offsetting alternate central apertures in accordance with the present invention may lead to the legs of the blank (and also the legs of a channel formed from the core) being slightly tilted. This has no adverse effect on the desirable characteristics of the strip.

In order to permit stretching of a strip of metal lanced as described in connection with the second aspect of the present invention, it is necesary to provide overlap between the ends of the central apertures and adjacent slots. On stretching, the regions of overlap become interconnecting inclined portions between adjacent legs.

Normally, the apertures in the central region of the core will extend across the base of the channel-shaped core, when the core has been folded to its desired channel-shaped configuration and the ends of each aperture will terminate in the region of the junction between the base and a side wall. However, it is considered possible that, with a channel having a narrow base, the apertures may extend somewhat into the channel side walls. Nevertheless, the apertures will have a maximum length of 50% of the overall width of the blank and, as suh, even with a channel having a narrow base and apertures of the maximum length possible, the linking parts between adjacent subunits of the channel will still be disposed in the upper part of the side walls toward the base of the channel, rather than toward the extremities of the side walls.

The length of each aperture is preferably no less than 20% of the total width of the blank, more preferably in the range of from 25% to 40% of the width of the blank, most preferably about 30% of the width of the blank.

The ratio of the length of each aperture to the distance between the apices of an aligned pair of slots adjacent to the aperture is preferably in the range of from 2 : 1 to 4 : 1 and is most preferably about 3 : 1.

The blank of the present invention, when formed by a stretching technique, does not suffer from the disadvantages of stretched prior art cores. Firstly, the draw-back of high punch wear/breakage is not encountered. In addition, the central spine is not thinned during stretching and the blank is therefore capable of being formed into a channel for a strip structure which does not suffer from a loss of clamping effect. It is envisaged that, using the stretching technique, a strip length gain of about 20% can be achieved. This ensures sufficient interstices to permit the plastics material of the strip structure to key together through the steel core during extrusion whilst at the same time allowing full flexibility of the strip structure.

According to a third aspect of the present invention, there is provided a flexible channel-shaped strip structure incorporating a channel-shaped core made from an elongate blank in accordance with the first aspect of the present invention.

In a fourth embodiment of the present invention, there is provided a method of making a strip structure incorporating a channel-shaped carrier, which method comprises forming an elongate carrier blank by a method according to the second aspect of the present invention ; covering the channel-shaped carrier with a flexible resilient material to enclose the carrier ; and before or after the carrier is covered, forming the carrier blank into a channel shape.

The blank of the present invention may be used to form the extended core for more complicated strip structures which include a channel in combination with another feature such as a lip or an additional channel, inverted in relation to the first channel.

Preferably, the flexible resilient material is a plastics material and the strip structure is formed by extrusion. However, other materials, such as conventional rubber materials, may be used as the resilient flexible material.

For a better understanding of the present invention and to show how the same may be carried into effect, reference will now be made, by way of example, to the accompanying drawings in which :

Figure 1 shows one embodiment of an elongate carrier blank according to one aspect of the present invention ;

Figure 2 shows a metal blank of Figure 1 formed into a channel-shaped core ;

Figure 3 shows a metal strip like that of Figure 1 having been lanced but before stretching ; and

Figure 4 shows a strip structure incorporating a metal core according to the present invention.

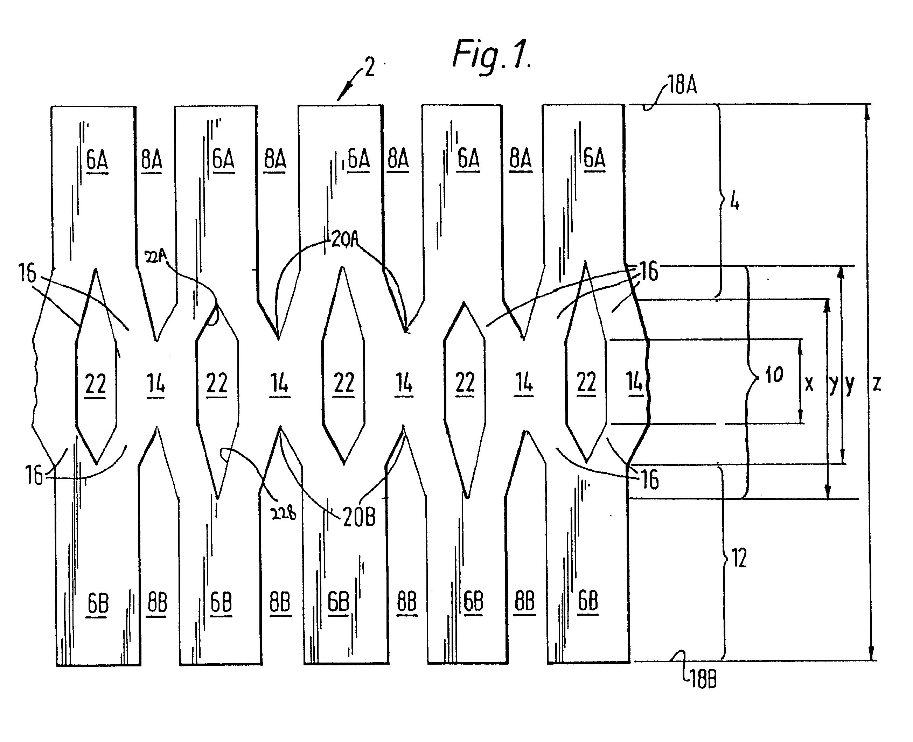

Referring firstly to Figure 1, a core blank 2 is made from a metal, preferably steel. Only a short length of the elongate core blank 2 is shown. The core has three generally separate, although slightly overlapping, regions, namely a first region 4 comprising a regular series of alternate legs 6A and spaces 8A ; a second, intermediate region or spine region 10 ; and a third region 12, which is similar to the first region 4 and comprises a regular series of alternate legs 6B and spaces 8B. The spine region 10 comprises a plurality of regularly spaced-apart elements 14. Each of these elements 14 is connected, by means of short connecting links 16 to four separate legs 6A, 6B (two legs 6A on one side and two legs 6B on the other side of the spine 10). The elements 14 are separated by regularly spaced, generally hexagonal apertures 22.

In the embodiment shown, alternate apertures 22 are offset or displaced to opposite sides of the blank. Thus, each aperture 22 extends further into a leg 6A or 6B on one side than it extends into the leg 6B or 6A on the other, opposite, side of the blank. Moreover, one end region 22A of each aperture has a relatively short taper, whilst the other end region 22B has a relatively long taper. It is also to be noted that the tapering end regions 22A and 22B of the apertures 22 overlap the slots 8A, 8B in the central region 10 of the blank 2.

The spaces 8A on one side of the blank are in registry with the spaces 8B on the other side of the blank. The apertures 22 between the elements 14 of the spine 10 are aligned with the centre line between an aligned pair of legs 6A, 6B.

Each of the spaces 8A, 8B terminates at an apex 20A, 20B within the spine region 10 of the blank 2. The distance between the apices of a pair of spaces 8A, 8B aligned across the blank 2 is x. Each of the apertures 22 is generally hexagonal (although one end of each aperture 22 has a longer taper than the other), and has a length, from apex to apex across the width of the blank, of y, which is much greater than its width (in the longitudinal direction of the blank 2). The overall width of the blank is z. For the present invention, the length of each aperture y must be no greater than 50% of the overall width of the blank z. Most preferably, the length of the aperture y is about one third the width of the blank. In a typical embodiment y is about 9 mm and z is about 32 mm.

The ratio of y to the distance x between the apices of a pair of spaces 8A, 8B aligned across the blank is critical and must be in the range of from 1.5 : 1 to 6 : 1. Preferably, the ratio is about 3 :1. In a typical embodiment x is about 3 mm giving a y : x ratio of about 3: 1.

The blank has a high degree of symmetry. Firstly, it is symmetrical about a longitudinal axis running centrally of the blank 2. Moreover, it is also symmetrical about a transverse line drawn centrally of a pair of aligned legs 6A, 6B or a transverse line drawn centrally of an element 14 of the spine 10.

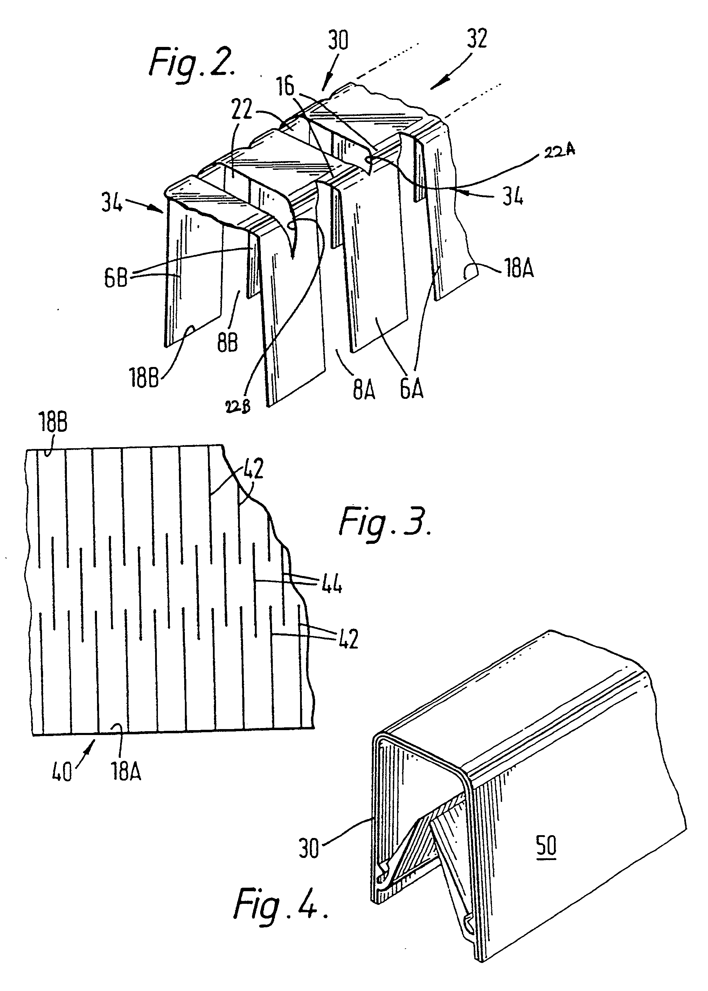

In Figure 2, the carrier blank of Figure 1 has been bent into a channel-shaped core 30 having a base 32 and two side walls 34. The apertures 22 of the spine 10 extend across substantially the whole width of the base 32 of the channel 30. It is also to be noted that one of the apertures 22 of the spine extends further into the side wall of the channel than the other aperture 22 shown. This is a result of the offset nature of the central apertures 22. The spaces 8A, 8B of the first and third regions 4, 12 extend from the lateral edges 18A, 18B of the strip to the intersection between the base 32 and side walls 34 of the channel. Accordingly, the connecting links 16 are disposed approximately at the junction of the second region (10) with the first or third region 4, 12. This is not, however, presently envisaged to be an essential feature of the invention. In some embodiments, the connecting units 16 may appear toward the top of the side walls 34 of the channel 30.

With reference to Figure 3, a portion of a metal blank 40 is shown before stretching to form a core blank 2 as shown in Figure 1. The blank 40 is provided with cuts including two first sets of regular cuts 42 extending normally from each lateral edge 18A, 18B of the strip. Each first cut 42 from one lateral edge 18A of the metal strip is co-linear with a cut 42 from the other lateral edge 18B of the strip. The cuts 42 terminate toward the outer part of the central region 10 of the strip which is to become the spine of the channel. The precise position at which the first cuts 42 terminate is determined by the profile of channel-shaped carrier required. Substantially evenly or equally spaced between adjacent first cuts 42, and parallel to the first cuts 42, are second cuts 44 which extend across the central region 10 of the metal strip and which overlap the cuts 42. Alternate cuts are offset to opposite sides of the blank such that, on stretching of the metal strip, a core blank of the configuration shown in Figure 1 is produced.

In Figure 4, a strip structure bearing a carrier strip according to the present invention is shown. The elongate channel shaped core 30 is covered by a flexible resilient material, preferably a flexible plastic 50. The plastic keys through the slots or spaces in the core to provide a resilient, flexible strip structure.

## Claims

1. An elongate, laminar blank (2) intended to be formed into an elongate channel-shaped core (30) for a strip structure comprising a central spine region (10) extending along the length of the blank (2) and, to each side of the central region (10), a side region (4, 12) comprising a regular series of alternate legs (6A, 6B) and slots (8A, 8B) ; each leg (6A, 6B) extending generally perpendicularly to the length of the blank (2) in a direction outwardly from the central region (10) to a lateral edge (18A, 18B) of the blank (2) and each leg (6A, 6B) on one of said sides (4, 12) being aligned across the width (z) of the blank (2) with a leg (6A, 6B) on the other of said sides (4, 12) to form a pair of aligned legs (6A, 6B) ; each slot (8A, 8B) extending from a respective apex (20A, 20B) outwardly to its respective lateral edge (18A, 18B) and each slot (8A, 8B) on one of said sides (4, 12) being aligned across the width (z) of the blank (2) with a slot (8A, 8B) on the other of said sides (4, 12) to form a pair of aligned slots (8A, 8B) ; and the central region (10) being provided with a plurality of evenly spaced apertures (22) each of which extends in a direction generally perpendicular to the length of the blank (2) and is aligned across the width (z) of the blank (2) with the centreline of a pair of aligned legs (6A, 6B) ; characterized in that the respective apex (20A, 20B) of each slot (8A, 8B) is located in the central region (10), in that the length (y), when measured in a direction generally perpendicular to the length of the blank (2), of each aperture (22) is no greater than 50% of the total width (z) of the blank (2), in that the ratio of the length (y) of each aperture (22) to the distance (x) between respective apices of an aligned pair of slots (8A, 8B) adjacent to the aperture (22) is in the range of from 1.5 : 1 to 6 : 1 and in that some of the apertures (22) in the central region (10) are offset to one side (4, 12) of the blank (2), others of the apertures (22) being offset to the other side (4, 12) of the blank (2).

2. A blank according to Claim 1 formed from a metal.

3. A blank according to Claim 2 formed from a steel.

4. A blank according to any preceding claim, wherein the length of each aperture is in the range of from 20% to 40% of the total width of the blank, preferably about 30% of the total width of the blank.

5. A blank according to any preceding claim, wherein the ratio of the length of each aperture (22) to the distance between respective apices of an aligned pair of slots adjacent to the aperture is in the range of from 2 : 1 to 4 : 1, preferably 3 : 1.

6. A blank according to any preceding claim, wherein alternate apertures are offset to opposite sides of the blank.

7. An elongate channel-shaped core formed from an elongate blank as claimed in any one of Claims 1 to 6, wherein the apertures (22) along the intermediate region of the strip extend substantially across the base of the channel with the legs forming the sides of the channel.

8. A method of producing an elongate blank as claimed in any preceding claim, which method comprises forming, in an elongate metal strip of substantially constant width, a first series of regular, spaced-apart cuts extending normally from each lateral edge of the metal strip, each terminating in an apex outwardly within an intermediate region of the strip, each cut from one lateral edge of the metal strip being co-linear with a cut from the other lateral edge of the strip ; forming a second series of cuts, parallel to the first series of cuts, and spaced equally or substantially equally between cuts of the first series of cuts, said second series of cuts extending across the intermediate region of the strip and terminating short of the lateral edges of the strip but overlapping adjacent cuts of the first series of cuts, some of said second series of cuts being offset to one side of the blank, others of the second series of cuts being offset to the other side of the blank ; and longitudinally stretching the strip so as to open the cuts thereby to form an elongate carrier blank ; wherein the length, when measured in a direction generally perpendicular to the length of the blank, of each of the second cuts is no greater than 50% of the total width of the blank and wherein the ratio of the length of each of the second cuts to the distance between the apices of an adjacent aligned pair of first cuts is in the range of from 1.5 : 1 to 6 : 1.

9. A method of producing an elongate blank in accordance with any one of Claims 1 to 6, wherein the elongate blank is punched from an elongate metal strip of substantially constant width.

10. A flexible channel-shaped strip structure incorporating a channel-shaped core as claimed in Claim 7.

11. A method of making a strip structure incorporating a channel-shaped carrier, which method comprises forming an elongate carrier blank by a method according to Claim 8 or 9 ; covering the channel-shaped carrier with a flexible resilient material to enclose the carrier ; and, before or after the carrier is covered, forming the carrier blank into a channel shape.

12. A method according to Claim 11, wherein the flexible resilient material is a plastics material or a rubber material and the strip structure is preferably formed by extrusion.

**Patentansprüche**

1. Länglicher, laminarer Zuschnitt (2), der zu einem länglichen kanalförmigen Kern (30) für ein Streifengebilde geformt werden soll, mit einem sich über die Länge des Zuschnitts (2) erstreckenden mittigen Rückenbereich (10) und, auf jeder Seite des mittigen Bereichs (10), einem Seitenbereich (4, 12), der eine regelmäßige Folge von sich abwechselnden Beinen (6A, 6B) und Schlitzen (8A, 8B) aufweist ; wobei sich jedes Bein (6A, 6B) im wesentlichen senkrecht zu der Längsrichtung des Zuschnitts (2) von dem mittigen Bereich (10) nach außen zu einem seitlichen Rand (18A, 18B) des Zuschnitts (2) erstreckt und jedes Bein (6A, 6B) an einer der Seiten (4, 12) über die Breite (z) des Zuschnitts (2) zu einem Bein (6A, 6B) auf der anderen dieser Seiten (4, 12) ausgerichtet ist, um somit ein Paar ausgerichteter Beine (6A, 6B) zu bilden ; wobei jeder Schlitz (8A, 8B) sich von einer jeweiligen Spitze (20A, 20B) nach außen zu seinem jeweiligen seitlichen Rand (18A, 18B) erstreckt und jeder Schlitz (8A, 8B) an einer dieser Seiten (4, 12) über die Breite (z) des Zuschnitts (2) zu einem Schlitz (8A, 8B) an der anderen dieser Seiten (4, 12) ausgerichtet ist, um somit ein Paar ausgerichteter Schlitze (8A, 8B) zu bilden ; und wobei der mittige Bereich (10) eine Mehrzahl von in gleichmäßigem Abstand voneinander angeordneter Öffnungen (22) aufweist, von welchen jede sich im wesentlichen in einer Richtung senkrecht zur Längsrichtung des Zuschnitts (2) erstreckt und über die Breite (z) des Zuschnitts (2) zu der Mittellinie eines Paars zueinander ausgerichteter Beine (6A, 6B) ausgerichtet ist ; dadurch gekennzeichnet, daß die jeweilige Spitze (20A, 20B) jedes Schlitzes (8A, 8B) in dem mittigen Bereich (10) angeordnet ist, daß die im wesentlichen senkrecht zur Längsrichtung des Zuschnitts (2) gemessene Länge (y) jeder Öffnung (22) nicht größer ist als 50% der gesamten Breite (z) des Zuschnitts (2), daß das Verhältnis der Länge (y) jeder Öffnung (22) zu der Entfernung (x) zwischen jeweiligen Spitzen eines zueinander ausgerichteten Paares von Schlitzen (8A, 8B), die der Öffnung (22) benachbart liegen, im Bereich von 1,5 : 1 bis 6 : 1 liegt, und daß einige der Öffnungen (22) in dem mittigen Bereich (10) zu einer Seite (4, 12) des Zuschnitts (2) versetzt sind, während andere der Öffnungen (22) zu der anderen Seite (4, 12) des Zuschnitts (2) versetzt sind.

2. Zuschnitt nach Anspruch 1, der aus Metall gebildet ist.

3. Zuschnitt nach Anspruch 2, der aus Stahl gebildet ist.

4. Zuschnitt nach einem vorhergehenden Anspruch, wobei die Länge jeder Öffnung im Bereich von 20% bis 40%, vorzugsweise bei ungefähr 30%, der gesamten Breite des Zuschnitts liegt.

5. Zuschnitt nach einem vorhergehenden Anspruch, wobei das Verhältnis der Länge jeder Öffnung (22) zu der Entfernung zwischen jeweiligen Spitzen (20A, 20B) eines zueinander ausgerichteten Paares von Schlitzen, welche benachbart der Öffnung (22) liegen, in dem Bereich von 2 : 1 bis 4 : 1, vorzugsweise bei 3 : 1, liegt.

6. Zuschnitt nach einem vorhergehenden Anspruch, wobei abwechselnde Öffnungen (22) zu gegenüberliegenden Seiten des Zuschnitts (2) hin versetzt sind.

7. Länglicher kanalförmiger Kern, der aus einem länglichen Zuschnitt nach einem der Ansprüche 1 bis 6 geformt ist, wobei die Öffnungen (22) entlang dem mittigen Bereich des Streifens sich im wesentlichen über die Basis des Kanals erstrecken, wobei die Beine die Seiten des Kanals bilden.

8. Verfahren zur Herstellung eines länglichen Zuschnitts nach einem vorhergehenden Anspruch, bei welchem, in einem länglichen Metallstreifen von im wesentlichen konstanter Breite, eine erste Reihe von regelmäßigen, im Abstand voneinander liegenden Schnitten, die sich senkrecht von jedem seitlichen Rand des Metallstreifens aus erstrecken, jeweils in einer Spitze außen in einem mittigen Bereich des Streifens auslaufen, gebildet wird, wobei jeder Schnitt von einem seitlichen Rand des Metallstreifens aus kolinear mit einem Schnitt von dem anderen seitlichen Rand des Streifens ist ; bei welchem eine zweite Reihe von Schnitten gebildet wird, die parallel zu der ersten Reihe von Schnitten verlaufen und in gleichmäßigem oder im wesentlichen gleichmäßigen Abstand zwischen Schnitten der ersten Reihe von Schnitten angeordnet sind, wobei die zweite Reihe von Schnitten sich über den mittigen Bereich des Streifens erstreckt und kurz vor den seitlichen Rändern des Streifens endet aber benachbarte Schnitte der ersten Reihe von Schnitten überlappt, wobei einige Schnitte dieser zweiten Reihe von Schnitten zu einer Seite des Zuschnitts versetzt sind, während andere Schnitte der zweiten Reihe von Schnitten zu der anderen Seite des Zuschnitts versetzt sind ; und bei welchem der Streifen in Längsrichtung so gedehnt wird, daß die Schnitte geöffnet werden, wodurch ein länglicher Trägerzuschnitt gebildet wird, bei welchem die in einer Richtung im wesentlichen senkrecht zur Länge des Zuschnitts gemessene Länge jedes der zweiten Schnitte, nicht größer als 50% der gesamten Breite des Zuschnitts ist und wobei das Verhältnis der Länge jedes der zweiten Schnitte zu der Entfernung zwischen den Spitzen eines benachbarten, zueinander ausgerichteten Paares von ersten Schnitten in dem Bereich von 1,5 : 1 zu 6 : 1 liegt.

9. Verfahren zur Herstellung eines länglichen Zuschnitts nach einem der Ansprüche 1 bis 6, wobei der längliche Zuschnitt aus einem länglichen Metallstreifen von im wesentlichen konstanter Breite ausgestanzt wird.

10. Flexibles kanalförmiges Streifengebilde mit einem kanalförmigen Kern nach Anspruch 7.

11. Verfahren zur Herstellung eines Streifengebildes mit einem kanalförmigen Träger, wobei ein länglicher Trägerzuschnitt gemäß einem Verfahren nach Anspruch 8 oder 9 gebildet wird ; wobei der kanalförmige Träger mit einem flexibel nachgiebigen Material bedeckt wird, um den Träger zu umhüllen ; und wobei, vor oder nach der Umhüllung des Trägers, der Trägerzuschnitt in einem Kanal geformt wird.

12. Verfahren nach Anspruch 11, wobei das flexibel nachgiebige Material ein Kunststoffmaterial oder Gummimaterial ist und das Streifengebilde vorzugsweise durch Extrusion geformt wird.


## Revendications

1. Ebauche lamelliforme (2) de forme allongée destinée à être transformée en une longue armature (30) à profil en U pour une structure de bande comprenant une région dorsale centrale (10) s'étendant le long de l'ébauche (2), et jusqu'à chaque côté de la région centrale (10), une région latérale (4, 12) comprenant une série régulière de branches (6A, 6B) et de fentes (8A, 8B) alternées ; chaque branche (6A, 6B) s'étendant d'une façon général perpendiculairement à la longueur de l'ébauche (2) en direction de l'extérieur depuis la région centrale (10) jusqu'au bord latéral (18A, 18B) de l'ébauche (2) et chaque branche (6A, 6B) sur un desdits côtés (4, 12) étant alignée dans le sens de la largeur (z) de l'ébauche (2) avec une branche (6A, 6B) se trouvant sur l'autre desdits côtés (4, 12) de manière à former une paire de branches alignées (6A, 6B) ; chaque fente (8A, 8B) s'étendant depuis un sommet respectif (20A, 20B) vers l'extérieur jusqu'à son bord latéral respectif (18A, 18B) et chaque fente (8A, 8B) se trouvant sur un desdits côtés (4, 12) étant alignée dans le sens de la largeur (z) de l'ébauche (2) avec une fente (8A, 8B) se trouvant sur l'autre desdits côtés (4, 12) de manière à former une paire de fentes alignées (8A, 8B) ; et la région centrale (10) étant pourvue d'une pluralité d'ouvertures (22) espacées de façon uniforme et dont chacune s'étend dans une direction perpendiculaire d'une façon générale à la longueur de l'ébauche (2) et est alignée dans le sens de la largeur (z) de l'ébauche (2) avec l'axe longitudinal d'une paire de branches alignées (6A, 6B) ; caractérisée par le fait que le sommet respectif (20A, 20B) de chaque fente (8A, 8B) se trouve dans la région centrale (10), que la longueur (y), mesurée dans une direction perpendiculaire d'une façon générale à la longueur de l'ébauche (2), de chaque ouverture (22) n'est pas supérieure à 50% de la largeur totale (z) de l'ébauche (2), que le rapport de la longueur (y) de chaque ouverture (22) à la distance (x) entre les sommets respectifs d'une paire alignée de fentes (8A, 8B) adjacente à l'ouverture (22) est compris entre 1,5 : 1 et 6 : 1 et que certaines des ouvertures (22) se trouvant dans la région centrale (10) sont décalées vers un côté (4, 12) de l'ébauche (2), les autres ouvertures (22) étant décalées vers l'autre côté (4, 12) de l'ébauche (2).

2. Ebauche selon la revendication 1, formée à partir d'un métal.

3. Ebauche selon la revendication 2, formée à partir d'un acier.

4. Ebauche selon l'une quelconque des revendications précédentes, dans laquelle la longueur de chaque ouverture est comprise entre 20% et 40% de la largeur totale de l'ébauche, et est égale de préférence à environ 30% de la largeur totale de l'ébauche.

5. Ebauche selon l'une quelconque des revendications précédentes, dans laquelle le rapport de la longueur de chaque ouverture (22) à la distance entre les sommets respectifs d'une paire alignée de fentes adjacente à l'ouverture est compris entre 2 : 1 et 4 : 1 et est égal de préférence à 3 : 1.

6. Ebauche selon l'une quelconque des revendications précédentes, dans laquelle les ouvertures alternées sont décalées vers les côtés opposés de l'ébauche.

7. Armature allongée à profil en U formée à partir d'une ébauche allongée telle que revendiquée dans l'une quelconque des revendications 1 à 6, dans laquelle les ouvertures (22) le long de la région intermédiaire de la bande s'étendent sensiblement en travers de la base ou âme du profilé en U, les branches formant les côtés du profilé en U.

8. Procédé de fabrication d'une ébauche allongée telle que revendiquée dans l'une quelconque des revendications précédentes, ce procédé consistant à former, dans une longue bande métallique de largeur sensiblement constante, une première série d'entailles régulières espacées les unes des autres et s'étendant perpendiculairement depuis chaque bord latéral de la bande métallique, chaque entaille se terminant par un sommet vers l'extérieur dans une région intermédiaire de la bande, chaque entaille s'étendant depuis un des bords latéraux de la bande métallique étant alignée avec une entaille s'étendant depuis l'autre bord latéral de la bande ; à former une seconde série d'entailles, parallèles à la première série d'entailles, et espacées de façon égale ou sensiblement égale entre les entailles de la première série d'entailles, ladite seconde série d'entailles s'étendant en travers de la région intermédiaire de la bande et se terminant en-deçà des bords latéraux de la bande mais de façon chevauchante par rapport aux entailles adjacentes de la première série d'entailles, certaines des entailles de ladite seconde série d'entailles étant décalées vers un des côtés de l'ébauche, les autres entailles de la seconde série d'entailles étant décalées vers l'autre côté de l'ébauche ; et à étirer longitudinalement la bande de manière à ouvrir les entailles afin de former de cette manière une ébauche de support de forme allongée ; la longueur, mesurée dans une direction perpendiculaire d'une façon générale à la longueur de l'ébauche, de chacune des secondes entailles n'étant pas supérieure à 50% de la largeur totale de l'ébauche et le rapport de la longueur de chacune des secondes entailles à la distance entre les sommets d'une paire alignée adjacente de premières entailles étant compris entre 1, 5 : 1 et 6 : 1.

9. Procédé de fabrication d'une ébauche allongée selon l'une quelconque des revendications 1 à 6, dans lequel on découpe une ébauche allongée dans une bande métallique allongée de largeur sensiblement constante.

10. Structure de bande flexible à profil en U comprenant une armature à profil en U selon la revendication 7.

11. Procédé de fabrication d'une structure de bande comprenant un support à profil en U, ce procédé consistant à former une ébauche de support de forme allongée à l'aide d'un procédé selon la revendication 8 ou 9 ; à recouvrir le support à profil en U avec une matière élastique flexible pour enfermer le support ; et avant ou après que le support a été recouvert, à donner à l'ébauche de support la forme d'un profil en U.

12. Procédé selon la revendication 11, dans lequel la matière élastique flexible est une matière plastique ou du caoutchouc et la structure de bande est de préférence formée par extrusion.

## Fig.1.

EP 0 305 088 B1

Fig.2.

Fig.3.

Fig.4.